# FASCICULE DE BREVET EUROPEEN

(11) **EP 4 142 170 B1**
(45) Date de publication et mention de la délivrance du brevet: **06.08.2025**
(21) Numéro de dépôt: 22191177.9
(22) Date de dépôt: 19.08.2022
(51) Int. Cl.: H04B 3/54

(54) **PROCEDE ET DISPOSITIF DE TRANSMISSION D'UN MESSAGE**
VERFAHREN UND VORRICHTUNG ZUR ÜBERTRAGUNG EINER NACHRICHT
METHOD AND DEVICE FOR TRANSMITTING A MESSAGE

(30) Priorité: 26.08.2021 FR 2108918
(43) Date de publication de la demande: 01.03.2023
(73) Titulaire: Sagemcom Energy & Telecom SAS, 92270 Bois-Colombes (FR)
(72) Inventeur: BAROIS, Jérôme, 92500 RUEIL MALMAISON (FR); TERRIEN, Clément, 92500 RUEIL MALMAISON (FR)
(74) Mandataire: Cabinet Le Guen Maillet

(56) Documents cités:
- US-A1- 2012 134 395

## Description

### DOMAINE TECHNIQUE

Au moins un mode de réalisation concerne un procédé de transmission d'un message à partir d'un premier dispositif nœud vers un deuxième dispositif nœud appartenant à un voisinage du premier dispositif nœud, lesdits premier et deuxième dispositifs nœuds appartenant à un réseau de communication par courants porteurs en ligne hybride RF. Au moins un mode de réalisation concerne un dispositif mettant en œuvre le procédé.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif nœud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs nœuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Dans une évolution de la norme G3-PLC définie dans une Annexe H de la recommandation ITU-T G.9903 (2017) Amendement 1 (05/2021), appelée G3-PLC Hybrid PLC & RF, un canal radio RF (acronyme de radio-fréquence) peut être utilisé à la place d'une desdites bandes fréquentielles PLC. Plus précisément, cette version de la norme permet l'utilisation occasionnelle d'une couche physique radio secondaire basée sur une modulation SUN FSK telle que définie dans le standard IEEE 802.15.4:2015. Ainsi, en utilisant les différents media G3-PLC et RF pour transmettre des données, le réseau d'alimentation électrique maximise sa couverture et sa résilience. Un nœud réseau d'alimentation électrique capable d'émettre et de recevoir des données en utilisant les deux media (PLC et RF) est appelé nœud hybride.

Toutefois, dans G3-PLC Hybrid PLC & RF, le choix de communiquer entre deux nœuds hybrides du réseau de communication en utilisant soit une bande fréquentielle PLC soit un canal radio RF est déterminé au moment de la construction ou de la reconstruction des routes de communication.

Par exemple, les messages de découverte (beacon request en anglais) ou de diffusion (broadcast frame en anglais) sont émis par un nœud hybride simultanément sur les deux media PLC et RF tandis que les messages destinés à un seul nœud (unicast frame en anglais) ne sont transmis que sur un seul des deux média et l'acquittement des messages destinés à un seul nœud n'est effectué que sur le media sur lequel le message a été reçu.

Ce choix du medium de communication utilisé entre deux nœuds hybrides du réseau est généralement fixe pendant plusieurs heures. La norme G3-PLC Hybrid PLC & RF définie dans l'Amendement 1 (05/2021) ne permet donc pas d'utiliser toute la flexibilité offerte par l'hybridation PLC/RF.

Il est souhaitable de pallier ces différents inconvénients de l'état de la technique. Il est notamment souhaitable de proposer un procédé de communication qui permette d'utiliser dynamiquement les deux media de communication, en l'occurrence au moins une bande fréquentielle du réseau d'alimentation électrique utilisant des communications par courants porteurs en ligne et un canal radio.

La demande de brevet US 2012 134395 A1 divulgue des communications par courant porteur en ligne sur différents domaines de tension à l'aide de plusieurs sous-bandes de fréquences.

### EXPOSE DE L'INVENTION

A cette fin, selon un premier aspect, l'invention propose un procédé de transmission d'un message d'un premier dispositif nœud vers un deuxième dispositif nœud appartenant à un voisinage dudit premier dispositif nœud, lesdits premier et deuxième dispositifs nœuds appartenant à un réseau d'alimentation électrique utilisant des communications par courants porteurs en ligne, caractérisé en ce que le premier dispositif nœud est apte à émettre et recevoir des fragments du message sur au moins une bande fréquentielle du réseau d'alimentation électrique utilisant des communications par courants porteurs en ligne et sur un canal radio et en ce que le procédé est exécuté par le premier dispositif nœud et comporte les étapes préalablement à la transmission du fragment, de :
- estimation, pour le canal radio, de la durée théorique de transmission du fragment sur le canal radio,
- estimation d'un taux d'utilisation cumulé, par le dispositif nœud, du canal radio en considérant que le fragment est transmis sur le canal radio et si le taux d'utilisation estimé est inférieur à un seuil maximum d'utilisation, le procédé comporte les étapes de :
   - estimation, pour la au moins une bande fréquentielle, de la durée théorique de transmission du fragment sur la au moins une bande fréquentielle,
   - obtention d'une base de données, du résultat d'intégration du taux d'occupation de la au moins une bande fréquentielle déterminé pendant plusieurs échelles de temps correspondant à la durée d'émission théorique du fragment sur la au moins une bande fréquentielle,
   - obtention de la base de données, du résultat d'intégration du taux d'occupation du canal radio déterminé pendant plusieurs échelles de temps correspondant à la durée d'émission théorique du fragment sur le canal radio,
   - sélection à partir des résultats d'intégration de taux de la au moins une bande fréquentielle ou du canal radio,
   - transmission du fragment sur la au moins une bande fréquentielle ou sur le canal radio en fonction de la sélection.

L'invention concerne aussi un dispositif de transmission d'un message d'un premier dispositif nœud vers un deuxième dispositif nœud appartenant à un voisinage dudit premier dispositif nœud, lesdits premier et deuxième dispositifs nœuds appartenant à un réseau d'alimentation électrique utilisant des communications par courants porteurs en ligne, caractérisé en ce que le premier dispositif nœud est apte à émettre et recevoir des fragments du message sur au moins une bande fréquentielle du réseau d'alimentation électrique utilisant des communications par courants porteurs en ligne et sur un canal radio et en ce que le premier dispositif nœud active préalablement à la transmission du fragment:
- des moyens d'estimation, pour le canal radio, de la durée théorique de transmission du fragment sur le canal radio,
- des moyens d'estimation d'un taux d'utilisation cumulé, par le dispositif nœud, du canal radio en considérant que le fragment est transmis sur le canal radio et si le taux d'utilisation estimé est inférieur à un seuil maximum d'utilisation, le premier dispositif nœud active :
   - des moyens d'estimation, pour la au moins une bande fréquentielle, de la durée théorique de transmission du fragment sur la au moins une bande fréquentielle,
   - des moyens d'obtention d'une base de données, du résultat d'intégration du taux d'occupation de la au moins une bande fréquentielle déterminé pendant plusieurs échelles de temps correspondant à la durée d'émission théorique du fragment sur la au moins une bande fréquentielle,
   - des moyens d'obtention de la base de données, du résultat d'intégration du taux d'occupation du canal radio déterminé pendant plusieurs échelles de temps correspondant à la durée d'émission théorique du fragment sur le canal radio,
   - des moyens de sélection à partir des résultats d'intégration de taux de la au moins une bande fréquentielle ou du canal radio,
   - des moyens de transmission du fragment sur la au moins une bande fréquentielle ou sur le canal radio en fonction de la sélection.

Ainsi, la présente invention permet de bénéficier des avantages, en termes de débit, portée, résistance aux perturbateurs, de la au moins une bande fréquentielle ou du canal radio.

De plus, en déterminant des taux d'occupation de la au moins une bande fréquentielle et du canal radio sur plusieurs échelles de temps, il est possible de prendre en compte et d'anticiper les variations cycliques de l'occupation du réseau de communication. Les variations cycliques de l'occupation du réseau de communication sont liées par exemple aux interrogations cycliques par un concentrateur pour obtenir des courbes de charges des compteurs. Ces interrogations peuvent être faites selon une périodicité horaire, journalière ou autre.

Selon un mode particulier de l'invention, si le taux d'utilisation estimé n'est pas inférieur à un seuil maximum d'utilisation, le procédé comporte l'étape de transmission du fragment sur la bande fréquentielle.

Selon un mode particulier de l'invention, les résultats d'intégration de taux d'occupation de la ou chaque bande fréquentielle et du canal radio sont déterminés pendant trois échelles de temps, une deuxième échelle de temps étant supérieure à une première échelle de temps et inférieure à une troisième échelle de temps.

Selon un mode particulier de l'invention, la première échelle de temps est la minute, la deuxième échelle de temps est l'heure, la troisième échelle de temps est la journée.

Selon un mode particulier de l'invention, la base de données mémorise des résultats d'intégration de taux d'occupation de la au moins une bande fréquentielle et du canal radio déterminés pendant la première échelle de temps sur une durée d'une heure, mémorise des résultats d'intégration de taux d'occupation de la au moins une bande fréquentielle et du canal radio déterminés pendant la deuxième échelle de temps sur une durée de vingt-quatre heures et mémorise des résultats d'intégration de taux d'occupation de la au moins une bande fréquentielle et du canal radio déterminés pendant la troisième échelle de temps sur une durée d'une semaine.

Selon un mode particulier de l'invention, la au moins une bande fréquentielle fait partie d'un ensemble de bandes fréquentielles comprenant :
- la bande fréquentielle CENELEC A;
- la bande fréquentielle CENELEC B; et
- la bande fréquentielle FCC ou la bande fréquentielle ARIB.

La présente invention concerne aussi un produit programme d'ordinateur. Il comprend des instructions pour implémenter, par un dispositif nœud, le procédé selon l'un des modes de réalisation précédents, lorsque ledit programme est exécuté par un processeur du dispositif nœud.

La présente invention concerne aussi un support de stockage. Il stocke un programme d'ordinateur comprenant des instructions pour implémenter, par un dispositif nœud, le procédé selon l'un des modes de réalisation précédents, lorsque ledit programme est exécuté par un processeur du dispositif nœud.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un réseau de communication selon un mode de réalisation ;
[Fig. 2] illustre schématiquement les différentes couches d'un modèle OSI dans le cas particulier de la norme G3-PLC Hybrid PLC & RF ;
[Fig. 3] illustre schématiquement un procédé de génération et de mise à jour d'une base de données pour au moins une bande fréquentielle ou pour le canal radio du réseau de communication selon la présente invention ;
[Fig. 4] illustre schématiquement un procédé de sélection d'au moins une bande fréquentielle ou du canal radio du réseau de communication pour l'émission d'un message selon la présente invention ;
[Fig. 5] illustre schématiquement un exemple d'architecture matérielle d'un dispositif nœud du réseau de communication selon un mode de réalisation.

### EXPOSE DETAILLE DE MODES DE REALISATION

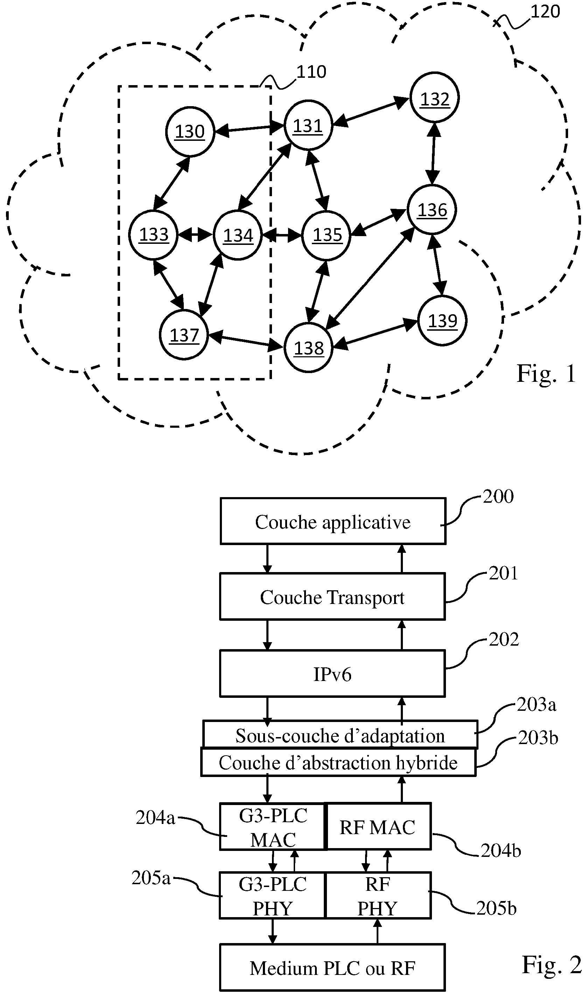

La Fig. 1 illustre schématiquement un réseau de communication maillé 120. Le réseau de communication maillé 120 est par exemple un réseau d'alimentation électrique de type AMM. Le réseau de communication maillé 120 s'appuie sur des communications par courants porteurs en ligne PLC ou par radio-fréquences RF pour permettre à un dispositif nœud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs nœuds du réseau de communication maillé 120. Le réseau de communication maillé 120 peut comporter d'autres dispositifs nœuds, par exemple installés au niveau de transformateurs électriques. Le réseau de communication 120 a donc une structure maillée, telle que représentée schématiquement sur la Fig. 1 à l'aide des flèches, où des dispositifs nœuds jouent le rôle de relais pour augmenter la portée des communications dans le réseau de communication maillé 120, comme détaillé ci-après. Ainsi, un même compteur électrique intelligent dispose potentiellement de plusieurs chemins pour atteindre le concentrateur de données, et vice versa. Dans la suite du document, les termes « compteur électrique intelligent » et « compteur » sont utilisés de manière interchangeable.

La présente invention est ainsi particulièrement adaptée au contexte de la technologie G3-PLC Hybrid PLC & RF telle que définie dans la recommandation ITU-T G.9903 (2017) Amendement 1 (05/2021) et plus particulièrement dans l'Annexe H.

Le réseau de communication maillé 120 comporte ainsi une pluralité de dispositifs nœuds 130, 131, 132, 133, 134, 135, 136, 137, 138, 139. A chaque dispositif nœud du réseau de communication maillé 120 est associé un voisinage réseau. Sur la Fig. 1, le dispositif nœud 133 est associé à un voisinage réseau 110 englobant les dispositifs nœuds 130, 134 et 137. En effet, dans le réseau de communication maillé 120, un signal ou un message diffusé par un dispositif nœud (tel que le dispositif nœud 133) n'est en général pas visible en tout point dudit réseau de communication. Chaque dispositif nœud émetteur de signaux ou de messages dispose alors d'un voisinage réseau, c'est-à-dire d'un sous-ensemble dudit réseau de communication maillé 120 dans lequel tout dispositif nœud peut recevoir de manière intelligible lesdits signaux ou messages directement en provenance du dispositif nœud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif nœud à la source desdits signaux et aussi potentiellement en fonction de caractéristiques du canal de communication (atténuation, bruit, impédance...).

Le réseau de communication maillé 120 s'appuie sur un protocole de routage de type réactif, tel que le protocole LOADng (« Lightweight On-demand Ad hoc Distance-vector Routing Protocol - Next Generation » en anglais). Contrairement aux protocoles de routage de type proactif qui s'appuient sur une connaissance globale de topologie réseau, les protocoles de routage de type réactif s'appuient sur des découvertes de routes à la demande, chaque dispositif nœud du réseau ayant alors besoin uniquement d'avoir connaissance de son propre voisinage réseau pour router des données dans le réseau de communication maillé 120.

En termes de bandes fréquentielles utilisables dans le cadre de la mise en œuvre du réseau de communication maillé 120, on peut citer : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; la bande fréquentielle CENELEC B, qui va approximativement de 98 kHz à 122 kHz et le canal radio RF qui va approximativement de 863 MHz à 870 MHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; un quatrième schéma de modulation à seize porteuses dans la bande fréquentielle CENELEC B et un cinquième schéma de modulation de type SUN-FSK pour le canal radio RF de G3-PLC Hybrid PLC & RF. La modulation SUN-FSK est définie dans la section 20 du document IEEE 802.15.4 :2015.

La Fig. 2 illustre schématiquement les différentes couches d'un modèle OSI dans le cas particulier de la norme G3-PLC Hybrid PLC & RF telle que définie dans l'annexe H de la recommandation ITU-T G.9903 (2017) Amendement 1 (05/2021).

Un message à transmettre provenant d'une couche applicative 200 est transmis à une couche transport 201. La couche transport 201 regroupe l'ensemble des protocoles chargés de la gestion des erreurs et du contrôle des flux réseaux. Les deux principaux protocoles utilisés sont les protocoles TCP et UDP. La couche transport 201 crée des paquets en ajoutant des entêtes aux données en provenance de la couche applicative 200. Les paquets sont ensuite transmis à la couche IP, e.g. IPv6 202. La couche IP 202 encapsule les paquets en provenance de la couche transport 201 en ajoutant notamment un entête IPv6. Un paquet IPv6 peut faire jusqu'à 1400 octets. Dans le cas où le paquet est de taille supérieure à une valeur de seuil, ce paquet est fragmenté en au moins deux fragments afin de l'adapter aux contraintes de la couche MAC (acronyme anglais de « Media Access Control »), notamment à la taille des trames MAC.

A cet effet, la norme G3-PLC Hybrid PLC & RF incorpore le protocole 6LoWPAN lequel permet d'adapter des paquets de données IPv6 aux contraintes des couches MAC, notamment en les fragmentant. En effet, les trames MAC utilisées sont de tailles bien inférieures (400 octets maximum disponibles par paquet pour la partie IP) aux paquets IPv6 de 1 400 octets.

Les paquets IPv6 sont transmis à une sous-couche adaptation 203a qui incorpore le protocole 6LoWPAN qui le cas échéant les fragmente. Bien entendu dans le cas d'un paquet IPv6 suffisamment petit pour être contenu dans une seule trame MAC G3-PLC ou MAC RF aucune fragmentation n'est effectuée.

Une couche d'abstraction hybride 203b transfère ensuite le fragment ou le paquet IP en cas d'absence de fragmentation à la sous-couche MAC appropriée 204a ou 204b, en fonction du medium choisi pour sa transmission.

Dans la suite le terme fragment est utilisé pour désigner à la fois un fragment obtenu à partir d'un paquet IP fragmenté ou bien le paquet IP lui-même en cas d'absence de fragmentation.

La transmission d'un fragment sur le médium PLC, i.e. sur la ligne de courant, comprend classiquement différentes étapes notamment une segmentation des fragments afin de les adapter à la couche physique G3-PLC PHY 205a et une modulation OFDM du signal. La segmentation consiste à partitionner une trame MAC en PSDUs (acronyme anglais de « PHY Service Data Unit »). Tous les PSDU issus d'un même fragment sont modulés en utilisant un même schéma de modulation.

La transmission d'un fragment sur le canal radio RF comprend différentes étapes notamment une segmentation des fragments afin de les adapter à la couche physique radio RF PHY 205b et une modulation SUN-FSK du signal. Comme dans le cas PLC, la segmentation consiste à partitionner une trame MAC (acronyme anglais de « Media Access Control ») en PSDUs (acronyme anglais de « PHY Service Data Unit »). Tous les PSDU issus d'un même fragment sont modulés en utilisant un même schéma de modulation. La spécification de la couche physique radio RF PHY 205b est donnée dans les sections 10, 11 et 20 de la norme IEEE 802.15.4-2015 telle que modifiée par le document IEEE 802.15.4v :2017 et complétée par la Table H-5-1 de la recommandation ITU-T G.9903 (2017) Amendement 1 (05/2021).

Il est à noter que la norme G3-PLC Hybrid PLC & RF définie dans la Table H.6.8 de l'annexe H impose des contraintes sur le temps d'utilisation, sur une fenêtre temporelle glissante, du canal radio RF par chaque dispositif nœud. A cet effet, trois valeurs prédéterminées et un taux sont définis :
- macDutyCyclePeriod_RF : une première valeur prédéterminée qui définit une durée d'une fenêtre temporelle glissante en secondes (par exemple : 3600),
- macDutyCycleLimit_RF : une seconde valeur prédéterminée qui définit une limite absolue de temps d'utilisation autorisé sur la fenêtre temporelle glissante en secondes (par exemple : 90 pour les compteurs et 360 pour le data concentrateur),
- macDutyCycleThreshold_RF : une troisième valeur prédéterminée qui définit, pour chaque compteur et chaque concentrateur un seuil maximum d'utilisation du temps autorisé avant d'interrompre toute transmission RF, exprimé en pourcents (par exemple : 90, ce qui signifie que les transmissions sont arrêtées lorsque l'on atteint 90% de 90 secondes sur les 3600 dernières secondes pour les compteurs, ou 90% de 360 secondes sur les 3600 dernières secondes pour le concentrateur de données),
- macDutyCycleUsage_RF : un taux d'utilisation de la transmission par radio-fréquences. Ce taux d'utilisation est calculé sur la fenêtre glissante par rapport à la seconde valeur prédéterminée, i.e. macDutyCycleLimit_RF. La recommandation ITU-T G.9903 (2017) Amendement 1 (05/2021) indique dans la table H.6.8 que macDutyCycleUsage_RF = tps/macDutyCycleLimit_RF*100 où tps est le temps courant d'utilisation de la transmission par radio-fréquences cumulé sur la fenêtre temporelle glissante par le dispositif nœud.

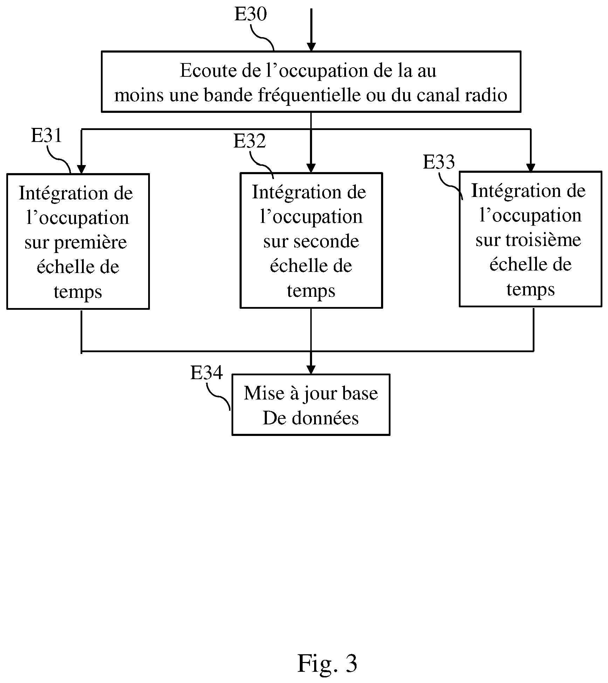

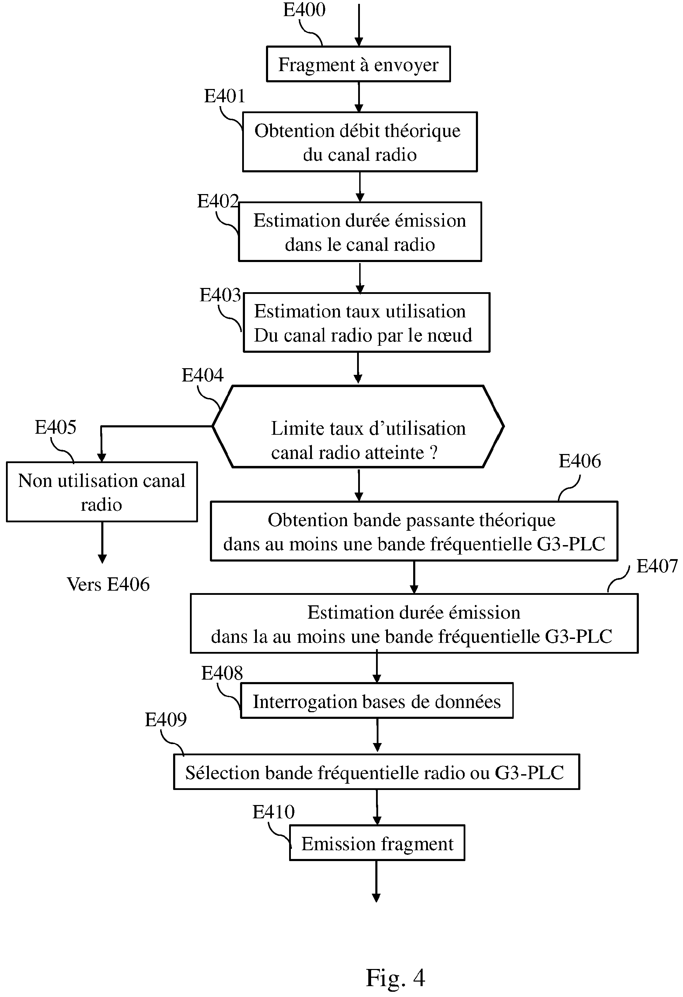

Afin d'utiliser toute la flexibilité offerte par l'hybridation PLC/RF, les procédés de communication décrits en référence aux Figs. 3 et 4 sont mis en œuvre pour répartir les fragments fournis par la sous-couche d'adaptation entre les deux couches MAC RF et MAC PLC de manière optimale. Plus précisément, les procédés décrits sont mis en œuvre au niveau de la couche d'abstraction hybride.

La Fig. 3 illustre schématiquement un procédé de génération et de mise à jour d'une base de données pour au moins une bande fréquentielle ou pour le canal radio du réseau de communication selon la présente invention.

Le procédé est exécuté en permanence par chaque dispositif nœud qui est apte à émettre et recevoir des messages sur au moins une bande fréquentielle et le canal radio du réseau de communication.

La au moins une bande fréquentielle est sélectionnée dans l'ensemble des bandes fréquentielles autorisées par G3-PLC, i.e. CENELEC A, CENELEC B, et ARIB ou FCC. Dans un mode particulier de réalisation, le procédé est exécuté en permanence pour plusieurs bandes fréquentielles de l'ensemble des bandes fréquentielles par G3-PLC, i.e. CENELEC A, CENELEC B, et ARIB ou FCC.

A l'étape E30, le dispositif nœud détermine le taux d'occupation d'une bande fréquentielle ou du canal radio. Le taux d'occupation d'une bande fréquentielle G3-PLC est par exemple déterminé en utilisant le mécanisme utilisé dans la méthode d'écoute d'un Support à Accès Multiple CSMA/CA (en anglais Carrier Sense Multiple Access with Collision Avoidance). Le mécanisme permet de vérifier à tout moment si la bande fréquentielle est occupée ou non. Le taux d'occupation est calculé en mesurant pendant la fenêtre temporelle le temps d'occupation de la bande de fréquence.

Le taux d'occupation du canal radio est par exemple déterminé en mesurant pendant la fenêtre temporelle le temps d'occupation du canal radio.

Par exemple, la fenêtre temporelle est égale à une minute et le taux d'occupation indique, pour la minute, le nombre de secondes pendant lequel la bande fréquentielle ou le canal radio est occupé.

A l'étape E31, le dispositif nœud intègre les taux d'occupation déterminés pendant une première échelle de temps. La première échelle de temps est par exemple égale à une minute. Par exemple, le dispositif nœud calcule la moyenne des soixante taux d'occupation déterminés pendant la minute.

Le résultat de l'intégration est ensuite mémorisé à l'étape E34 dans une base de données en association avec un marqueur temporel.

La base de données comporte un premier nombre donné de résultats d'intégrations pendant la première échelle de temps sur une première durée. Par exemple, la première durée est égale à une heure et le premier nombre donné est égal à soixante.

Par exemple, la première durée est égale à vingt-quatre heures et le premier nombre donné est égal à mille quatre cents.

A l'étape E32, le dispositif nœud intègre les taux d'occupation déterminés pendant une deuxième échelle de temps. La deuxième échelle de temps est supérieure à la première échelle de temps. La deuxième échelle de temps est par exemple égale à une heure. Par exemple, le dispositif nœud calcule la moyenne des trois mille six cents taux d'occupation déterminés pendant l'heure.

Le résultat de l'intégration est ensuite mémorisé à l'étape E34 dans une base de données en association avec un horodatage.

La base de données comporte un deuxième nombre donné de résultats d'intégrations pendant la deuxième échelle de temps sur une deuxième durée. Par exemple, la deuxième durée est égale à vingt-quatre heures et le deuxième nombre donné est égal à vingt-quatre. Par exemple, la deuxième durée est égale à vingt-quatre heures et le deuxième nombre donné est égal à cent soixante-huit.

A l'étape E33, le dispositif nœud intègre les taux d'occupation déterminés pendant une troisième échelle de temps. La troisième échelle de temps est supérieure à la deuxième échelle de temps. La troisième échelle de temps est par exemple égale à vingt-quatre heures. Par exemple, le dispositif nœud calcule la moyenne des deux cent seize mille taux d'occupation déterminés pendant vingt-quatre heures.

Le résultat de l'intégration est ensuite mémorisé à l'étape E34 dans une base de données en association avec un marqueur temporel.

La base de données comporte un troisième nombre donné de résultats d'intégrations pendant la troisième échelle de temps sur une troisième durée. Par exemple, la troisième durée est égale à sept jours et le troisième nombre donné est égal à sept.

Par exemple, la troisième durée est égale à sept jours et le troisième nombre donné est égal à vingt-huit.

La Fig. 4 illustre schématiquement un procédé de sélection d'au moins une bande fréquentielle ou du canal radio du réseau de communication pour l'émission d'un message selon la présente invention.

Le procédé est exécuté à chaque envoi d'un message par chaque dispositif nœud qui est apte à émettre et recevoir des messages sur au moins une bande fréquentielle et sur le canal radio du réseau de communication.

Les bandes fréquentielles associées sont par exemple sélectionnées dans l'ensemble des bandes fréquentielles autorisées par G3-PLC, i.e. CENELEC A, CENELEC B, et ARIB ou FCC.

A l'étape E400, le dispositif nœud a un fragment à envoyer sur le réseau de communication.

A l'étape E401, le dispositif nœud obtient le débit théorique du canal radio.

A l'étape E402, le dispositif nœud estime, pour le canal radio, la durée d'émission théorique du fragment sur le canal radio.

A l'étape E403, le dispositif nœud estime le taux d'utilisation cumulé, par le dispositif nœud, du canal radio RF en pourcent en considérant que le fragment est transmis sur le canal radio.

A l'étape E404, le dispositif nœud vérifie si le taux d'utilisation estimé macDutyCycleUsage_RF est inférieur à la troisième valeur prédéterminée macDutyCycleThreshold_RF.

Dans l'affirmative, le dispositif nœud passe à l'étape E406. Dans la négative, le dispositif nœud passe à l'étape E405.

A l'étape E405, le dispositif nœud interdit la sélection du canal radio pour l'émission du fragment et passe à l'étape E406.

A l'étape E406, le dispositif nœud obtient le débit théorique d'une ou plusieurs bandes fréquentielles sur laquelle le dispositif nœud est apte à émettre et recevoir des messages.

Comme mentionné précédemment, chaque bande fréquentielle a, pour chaque type de modulation utilisée sur la bande fréquentielle, un débit théorique donné. Le dispositif nœud obtient le débit théorique de la ou de chaque bande fréquentielle sur laquelle le dispositif nœud est apte à émettre et recevoir des messages correspondant à la modulation utilisée pour l'envoi du fragment au nœud vers lequel le fragment doit être transféré.

A l'étape E407, le dispositif nœud estime, pour la ou chaque bande fréquentielle, la durée d'émission théorique du fragment sur la ou chaque bande fréquentielle.

A l'étape E408, le dispositif nœud interroge la base de données pour obtenir les résultats d'intégration correspondant à la durée d'émission théorique du fragment dans chaque bande fréquentielle et sur le canal radio si la sélection du canal radio n'est pas interdite. Ainsi, le dispositif nœud obtient, pour le canal radio si la sélection du canal radio n'est pas interdite et pour la ou chaque bande fréquentielle, le nombre de résultats d'intégrations pendant la première échelle de temps correspondant à la durée d'émission théorique du fragment dans la bande fréquentielle et dans le canal radio si la sélection du canal radio n'est pas interdite. Le dispositif nœud obtient le nombre de résultats d'intégrations pendant la deuxième échelle de temps correspondant à l'heure à laquelle le fragment doit être envoyé. Le dispositif nœud obtient le nombre de résultats d'intégrations pendant la troisième échelle de temps correspondant au jour auquel le fragment doit être envoyé.

A l'étape E409, le dispositif nœud sélectionne la bande fréquentielle ou la bande fréquentielle parmi les bandes fréquentielles ou le canal radio si la sélection du canal radio n'est pas interdite pour laquelle ou lequel les résultats d'intégration sont les plus faibles. Par exemple, le dispositif nœud calcule pour la ou chaque bande fréquentielle et pour le canal radio si la sélection du canal radio n'est pas interdite, la moyenne des résultats d'intégrations pendant les première, deuxième et troisième échelles de temps et sélectionne la bande fréquentielle pour laquelle la moyenne calculée est la plus faible.

En variante, un poids est affecté aux résultats d'intégrations pendant les première, deuxième et troisième échelles de temps avant le calcul de la moyenne.

Par exemple un poids de 10 est affecté aux résultats d'intégrations pendant la première échelle de temps, un poids de 12 est affecté aux résultats d'intégrations pendant la deuxième échelle de temps et un poids de 7 est affecté aux résultats d'intégrations pendant la troisième échelle de temps.

A l'étape E410, le dispositif nœud transfère le fragment sur la bande fréquentielle sélectionnée ou sur le canal radio si le canal radio a été sélectionné.

Il est à remarquer ici que si le dispositif nœud est apte à transmettre et/ou recevoir des messages sur une unique bande fréquentielle et que la sélection du canal radio est interdite, le dispositif nœud n'exécute pas les étapes E406 à E409 et transfère le fragment sur la bande fréquentielle où il est apte à transmettre et/ou recevoir des messages.

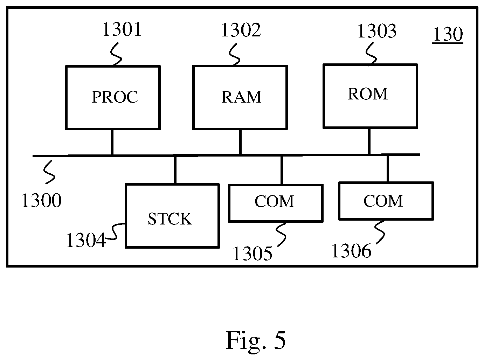

La Fig. 5 illustre schématiquement un exemple d'architecture matérielle d'un dispositif nœud du réseau de communication selon un mode de réalisation.

Un tel dispositif nœud est qualifié de multi-bandes car capable de transmettre un message sur plusieurs bandes fréquentielles. On note que la Fig. 5 pourrait aussi illustrer schématiquement un exemple d'architecture matérielle d'un module de traitement compris dans le dispositif nœud.

Selon l'exemple d'architecture matérielle représenté à la Fig. 5, le dispositif nœud 130 comprend alors, reliés par un bus de communication 1300 : un processeur ou CPU (« Central Processing Unit » en anglais) 1301 ; une mémoire vive RAM (« Random Access Memory » en anglais) 1302 ; une mémoire morte ROM (« Read Only Memory » en anglais) 1303 ; une unité de stockage telle qu'un disque dur (ou un lecteur de support de stockage, tel qu'un lecteur de cartes SD (« Secure Digital » en anglais) 1304 ; au moins une interface de communication 1305 permettant au dispositif nœud 130 de communiquer avec les dispositifs nœuds appartenant à son voisinage, e.g. les nœuds 131 et 133.

Le processeur 1301 est capable d'exécuter des instructions chargées dans la RAM 1302 à partir de la ROM 1303, d'une mémoire externe (non représentée), d'un support de stockage (tel qu'une carte SD), ou d'un réseau de communication. Lorsque le dispositif nœud est mis sous tension, le processeur 1301 est capable de lire de la RAM 1302 des instructions et de les exécuter. Ces instructions forment un programme d'ordinateur causant la mise en œuvre, par le processeur 1301, de tout ou partie des procédés décrits en relation avec les Figs. 3 et 4.

Les procédés décrits ci-après en relation avec les Figs. 3 et 4 peuvent être implémentés sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif nœud 130 comprend de la circuiterie électronique configurée pour mettre en œuvre les procédés décrits en relation avec les Figs. 3 et 4.

## Revendications

1. Procédé de transmission d'un message d'un premier dispositif nœud vers un deuxième dispositif nœud appartenant à un voisinage dudit premier dispositif nœud, lesdits premier et deuxième dispositifs nœuds appartenant à un réseau d'alimentation électrique utilisant des communications par courants porteurs en ligne, **caractérisé en ce que** le premier dispositif nœud est apte à émettre et recevoir des fragments du message sur au moins une bande fréquentielle du réseau d'alimentation électrique utilisant des communications par courants porteurs en ligne et sur un canal radio et **en ce que** le procédé est exécuté par le premier dispositif nœud et comporte les étapes préalablement à la transmission du fragment, de :
- estimation (E402), pour le canal radio, de la durée théorique de transmission du fragment sur le canal radio,
- estimation (E403)d'un taux d'utilisation cumulé, par le dispositif nœud, du canal radio en considérant que le fragment est transmis sur le canal radio et si le taux d'utilisation estimé est inférieur à un seuil maximum d'utilisation, le procédé comportant les étapes de :
- estimation (E407), pour la au moins une bande fréquentielle, de la durée théorique de transmission du fragment sur la au moins une bande fréquentielle,
- obtention (E408) d'une base de données, du résultat d'intégration du taux d'occupation de la au moins une bande fréquentielle déterminé pendant plusieurs échelles de temps correspondant à la durée d'émission théorique du fragment sur la au moins une bande fréquentielle,
- obtention (E408) de la base de données, du résultat d'intégration du taux d'occupation du canal radio déterminé pendant plusieurs échelles de temps correspondant à la durée théorique de transmission du fragment sur le canal radio,
- sélection (E409) à partir des résultats d'intégration de taux de la au moins une bande fréquentielle ou du canal radio,
- transmission (E410) du fragment sur la au moins une bande fréquentielle ou sur le canal radio en fonction de la sélection.

2. Procédé selon la revendication 1, **caractérisé en ce que** si le taux d'utilisation estimé n'est pas inférieur à un seuil maximum d'utilisation, le procédé comporte l'étape de transmission du fragment sur la bande fréquentielle.

3. Procédé selon la revendication 1 ou 2, **caractérisé en ce que** les résultats d'intégration de taux d'occupation de la ou chaque bande fréquentielle et du canal radio sont déterminés pendant trois échelles de temps, une deuxième échelle de temps étant supérieure à une première échelle de temps et inférieure à une troisième échelle de temps.

4. Procédé selon la revendication 3, **caractérisé en ce que** la première échelle de temps est la minute, la deuxième échelle de temps est l'heure, la troisième échelle de temps est la journée.

5. Procédé selon la revendication 3 ou 4, **caractérisé en ce que** la base de données mémorise des résultats d'intégration de taux d'occupation de la au moins une bande fréquentielle et du canal radio déterminés pendant la première échelle de temps sur une durée d'une heure, mémorise des résultats d'intégration de taux d'occupation de la au moins une bande fréquentielle et du canal radio déterminés pendant la deuxième échelle de temps sur une durée de vingt-quatre heures et mémorise des résultats d'intégration de taux d'occupation de la au moins une bande fréquentielle et du canal radio déterminés pendant la troisième échelle de temps sur une durée d'une semaine.

6. Procédé selon l'une quelconque des revendications 1 à 5, **caractérisé en ce que** la au moins une bande fréquentielle fait partie d'un ensemble de de bandes fréquentielles comprenant :
- la bande fréquentielle CENELEC A;
- la bande fréquentielle CENELEC B; et
- la bande fréquentielle FCC ou la bande fréquentielle ARIB.

7. Dispositif de transmission d'un message d'un premier dispositif nœud vers un deuxième dispositif nœud appartenant à un voisinage dudit premier dispositif nœud, lesdits premier et deuxième dispositifs nœuds appartenant à un réseau d'alimentation électrique utilisant des communications par courants porteurs en ligne, **caractérisé en ce que** le premier dispositif nœud est apte à émettre et recevoir des fragments du message sur au moins une bande fréquentielle du réseau d'alimentation électrique utilisant des communications par courants porteurs en ligne et sur un canal radio et **en ce que** le premier dispositif nœud active préalablement à la transmission du fragment:
- des moyens (1301) d'estimation, pour le canal radio, de la durée théorique de transmission du fragment sur le canal radio,
- des moyens (1301) d'estimation d'un taux d'utilisation cumulé, par le dispositif nœud, du canal radio en considérant que le fragment est transmis sur le canal radio et si le taux d'utilisation estimé est inférieur à un seuil maximum d'utilisation, le premier dispositif nœud active :
- des moyens (1301) d'estimation, pour la au moins une bande fréquentielle, de la durée théorique de transmission du fragment sur la au moins une bande fréquentielle,
- des moyens (1301) d'obtention d'une base de données, du résultat d'intégration du taux d'occupation de la au moins une bande fréquentielle déterminé pendant plusieurs échelles de temps correspondant à la durée théorique de transmission du fragment sur la au moins une bande fréquentielle,
- des moyens (1301) d'obtention de la base de données, du résultat d'intégration du taux d'occupation du canal radio déterminé pendant plusieurs échelles de temps correspondant à la durée d'émission théorique du fragment sur le canal radio,
- des moyens (1301) de sélection à partir des résultats d'intégration de taux de la au moins une bande fréquentielle ou du canal radio,
- des moyens (1301) de transmission du fragment sur la au moins une bande fréquentielle ou sur le canal radio en fonction de la sélection.

8. Un produit programme d'ordinateur **caractérisé en ce qu'**il comprend des instructions pour implémenter, par un dispositif nœud (130), le procédé selon l'une quelconque des revendications 1 à 6, lorsque ledit programme est exécuté par un processeur du dispositif nœud.

9. Un support de stockage **caractérisé en ce qu'**il stocke un programme d'ordinateur comprenant des instructions pour implémenter, par un dispositif nœud (130), le procédé selon l'une quelconque des revendications 1 à 6, lorsque ledit programme est exécuté par un processeur du dispositif nœud.

## Patentansprüche

1. Verfahren zur Übertragung einer Nachricht von einer ersten Knotenvorrichtung zu einer zweiten Knotenvorrichtung, die zu einer Nachbarschaft der ersten Knotenvorrichtung gehört, wobei die erste und zweite Knotenvorrichtung zu einem Stromversorgungsnetz gehören, das Kommunikation über Powerline verwendet, **dadurch gekennzeichnet, dass** die erste Knotenvorrichtung geeignet ist, Fragmente der Nachricht auf wenigstens einem Frequenzband des Stromversorgungsnetzes, das Kommunikation über Powerline verwendet, und auf einem Funkkanal zu senden und zu empfangen, und dadurch, dass das Verfahren von der ersten Knotenvorrichtung ausgeführt wird und die folgenden, der Übertragung des Fragments vorangehenden Schritte aufweist:
- Schätzen (E402), für den Funkkanal, der theoretischen Übertragungsdauer des Fragments auf dem Funkkanal,
- Schätzen (E403) eines kumulierten Auslastungsgrads des Funkkanals durch die Knotenvorrichtung unter Berücksichtigung, dass das Fragment auf dem Funkkanal übertragen wird, und wenn der geschätzte Auslastungsgrad niedriger als ein maximaler Auslastungsgrad ist, das Verfahren die folgenden Schritte aufweist:
- Schätzen (E407), für das wenigstens eine Frequenzband, der theoretischen Übertragungsdauer des Fragments auf dem wenigstens einen Frequenzband,
- Erhalten (E408) des Ergebnisses der Integration des Belegungsgrads des wenigstens einen Frequenzbands, der während mehrerer Zeitmaßstäbe bestimmt wird, die der theoretischen Sendedauer des Fragments auf dem wenigstens einen Frequenzband entsprechen, aus einer Datenbank,
- Erhalten (E408) des Ergebnisses der Integration des Belegungsgrads des Funkkanals, der während mehrerer Zeitmaßstäbe bestimmt wird, die der theoretischen Sendedauer des Fragments auf dem Funkkanal entsprechen, aus der Datenbank,
- Auswählen (E409) des wenigstens einen Frequenzbands oder des Funkkanals anhand der Ergebnisse der Integration des Grads,
- Übertragen (E410) des Fragments auf dem wenigstens einen Frequenzband oder auf dem Funkkanal je nach der Auswahl.

2. Verfahren nach Anspruch 1, **dadurch gekennzeichnet, dass**, wenn der geschätzte Auslastungsgrad nicht niedriger als eine maximale Auslastungsschwelle ist, das Verfahren den Schritt des Übertragens des Fragments auf dem Frequenzband aufweist.

3. Verfahren nach Anspruch 1 oder 2, **dadurch gekennzeichnet, dass** die Ergebnisse der Integration des Belegungsgrads des oder jedes Frequenzbands und des Funkkanals während dreier Zeitmaßstäbe bestimmt werden, wobei ein zweiter Zeitmaßstab größer als ein erster Zeitmaßstab und niedriger als ein dritter Zeitmaßstab ist.

4. Verfahren nach Anspruch 3, **dadurch gekennzeichnet, dass** der erste Zeitmaßstab die Minute, der zweite Zeitmaßstab die Stunde, die dritte Zeitmaßstab der Tag ist.

5. Verfahren nach Anspruch 3 oder 4, **dadurch gekennzeichnet, dass** die Datenbank Ergebnisse der Integration des Belegungsgrads des wenigstens einen Frequenzbands und des Funkkanals speichert, die während des ersten Zeitmaßstabs über eine Dauer von einer Stunde bestimmt werden, Ergebnisse der Integration des Belegungsgrads des wenigstens einen Frequenzbands und des Funkkanals speichert, die während des zweiten Zeitmaßstabs über eine Dauer von vierundzwanzig Stunden bestimmt werden, und Ergebnisse der Integration des Belegungsgrads des wenigstens einen Frequenzbands und des Funkkanals speichert, die während des dritten Zeitmaßstabs über eine Dauer von einer Woche bestimmt werden.

6. Verfahren nach einem der Ansprüche 1 bis 5, **dadurch gekennzeichnet, dass** das wenigstens eine Frequenzband zu einer Menge von Frequenzbändern gehört, die Folgendes umfasst:
- das Frequenzband CENELEC A;
- das Frequenzband CENELEC B; und
- das Frequenzband FCC oder das Frequenzband ARIB.

7. Vorrichtung zur Übertragung einer Nachricht von einer ersten Knotenvorrichtung zu einer zweiten Knotenvorrichtung, die zu einer Nachbarschaft der ersten Knotenvorrichtung gehört, wobei die erste und zweite Knotenvorrichtung zu einem Stromversorgungsnetz gehören, das Kommunikation über Powerline verwendet, **dadurch gekennzeichnet, dass** die erste Knotenvorrichtung geeignet ist, Fragmente der Nachricht auf wenigstens einem Frequenzband des Stromversorgungsnetzes, das Kommunikation über Powerline verwendet, und auf einem Funkkanal zu senden und zu empfangen, und dadurch, dass die erste Knotenvorrichtung vor der Übertragung des Fragments Folgendes aktiviert:
- Mittel (1301) zum Schätzen, für den Funkkanal, der theoretischen Übertragungsdauer des Fragments auf dem Funkkanal,
- Mittel (1301) zum Schätzen eines kumulierten Auslastungsgrads des Funkkanals durch die Knotenvorrichtung unter Berücksichtigung, dass das Fragment auf dem Funkkanal übertragen wird, und wenn der geschätzte Auslastungsgrad niedriger als ein maximaler Auslastungsgrad ist, die erste Knotenvorrichtung Folgendes aktiviert
- Mittel (1301) zum Schätzen, für das wenigstens eine Frequenzband, der theoretischen Übertragungsdauer des Fragments auf dem wenigstens einen Frequenzband,
- Mittel (1301) zum Erhalten des Ergebnisses der Integration des Belegungsgrads des wenigstens einen Frequenzbands, der während mehrerer Zeitmaßstäbe bestimmt wird, die der theoretischen Sendedauer des Fragments auf dem wenigstens einen Frequenzband entsprechen, aus einer Datenbank,
- Mittel (1301) zum Erhalten des Ergebnisses der Integration des Belegungsgrads des Funkkanals, der während mehrerer Zeitmaßstäbe bestimmt wird, die der theoretischen Sendedauer des Fragments auf dem Funkkanal entsprechen, aus der Datenbank,
- Mittel (1301) zum Auswählen des wenigstens einen Frequenzbands oder des Funkkanals anhand der Ergebnisse der Integration des Grads,
- Mittel (1301) zur Übertragung des Fragments auf dem wenigstens einen Frequenzband oder dem Funkkanal je nach der Auswahl.

8. Computerprogrammprodukt, **dadurch gekennzeichnet, dass** es Anweisungen zur Implementierung des Verfahrens nach einem der Ansprüche 1 bis 6 durch eine Knotenvorrichtung (130) bei Ausführung des Programms durch einen Prozessor der Knotenvorrichtung umfasst.

9. Speichermedium, **dadurch gekennzeichnet, dass** ein Computerprogramm darauf gespeichert ist, das Anweisungen zur Implementierung des Verfahrens nach einem der Ansprüche 1 bis 6 durch eine Knotenvorrichtung (130) bei Ausführung des Programms durch einen Prozessor der Knotenvorrichtung umfasst.

## Claims

1. Method for transmitting a message from a first node device to a second node device belonging to a neighbourhood of said first node device, said first and second node devices belonging to an electrical supply network using powerline communications, **characterised in that** the first node device is able to send and receive fragments of the message on at least one frequency band of the electrical supply network using powerline communications and over a radio channel and **in that** the method is executed by the first node device and comprises the steps, prior to the transmission of the fragment, of:
- estimating (E402), for the radio channel, the theoretical duration of transmission of the fragment over the radio channel,
- estimating (E403) a total degree of use, by the node device, of the radio channel while considering that the fragment is transmitted over the radio channel and, if the degree of use estimated is below a maximum use threshold, the method comprising the steps of:
- estimating (E407), for the at least one frequency band, the theoretical duration of transmission of the fragment on the at least one frequency band,
- obtaining (E408), from a database, the result of integration of the degree of occupation of the at least one frequency band determined during several timescales corresponding to the theoretical duration of transmission of the fragment on the at least one frequency band,
- obtaining (E408), from the database, the result of integration of the degree of occupation of the radio channel determined during several timescales corresponding to the theoretical duration of transmission of the fragment over the radio channel,
- selecting (E409), from the results of integration of the degree, the at least one frequency band or the radio channel,
- transmitting (E410) the fragment on the at least one frequency band or over the radio channel according to the selection.

2. Method according to claim 1, **characterised in that**, if the degree of use estimated is not below a maximum use threshold, the method comprises the step of transmitting the fragment on the frequency band.

3. Method according to claim 1 or 2, **characterised in that** the results of integration of the degree of occupation of the or each frequency band and of the radio channel are determined during three timescales, a second timescale being longer than a first timescale and shorter than a third timescale.

4. Method according to claim 3, **characterised in that** the first timescale is the minute, the second timescale is the hour, and the third timescale is the day.

5. Method according to claim 3 or 4, **characterised in that** the database stores results of integration of the degree of occupation of the at least one frequency band and of the radio channel determined during the first timescale over a period of one hour, stores results of integration of the degree of occupation of the at least one frequency band and of the radio channel determined during the second timescale over a period of twenty-four hours, and stores results of integration of the degree of occupation of the at least one frequency band and of the radio channel determined during the third timescale over a period of one week.

6. Method according to any one of claims 1 to 5, **characterised in that** the at least one frequency band forms part of a set of frequency bands comprising:
- the CENELEC A frequency band;
- the CENELEC B frequency band; and
- the FCC frequency band or the ARIB frequency band.

7. Device for transmitting a message from a first node device to a second node device belonging to a neighbourhood of said first node device, said first and second node devices belonging to an electrical supply network using powerline communications, **characterised in that** the first node device is able to send and receive fragments of the message on at least one frequency band of the electrical supply network using powerline communications and over a radio channel, and **in that** the first node device, prior to the transmission of the fragment, activates:
- means (1301) for estimating, for the radio channel, the theoretical duration of transmission of the fragment over the radio channel,
- means (1301) for estimating a total degree of use, by the node device, of the radio channel while considering that the fragment is transmitted over the radio channel and, if the degree of use estimated is below a maximum use threshold, the first node device activates:
- means (1301) for estimating, for the at least one frequency band, the theoretical duration of transmission of the fragment on the at least one frequency band,
- means (1301) for obtaining, from a database, the result of integration of the degree of occupation of the at least one frequency band determined during several timescales corresponding to the theoretical duration of transmission of the fragment on the at least one frequency band,
- means (1301) for obtaining, from the database, the result of integration of the degree of occupation of the radio channel determined during several timescales corresponding to the theoretical duration of transmission of the fragment over the radio channel,
- means (1301) for selecting, from the results of integration of the degree, the at least one frequency band or the radio channel,
- means (1301) for transmitting the fragment on the at least one frequency band or over the radio channel according to the selection.

8. A computer program product, **characterised in that** it comprises instructions for implementing, by a node device (130), the method according to any one of claims 1 to 6, when said program is executed by a processor of the node device.

9. A storage medium, **characterised in that** it stores a computer program comprising instructions for implementing, by a node device (130), the method according to any one of claims 1 to 6, when said program is executed by a processor of the node device.
